# EUROPEAN PATENT SPECIFICATION

(11) **EP 4 521 964 B1**
(45) Date of publication and mention of the grant of the patent: **13.05.2026**
(21) Application number: 23722342.5
(22) Date of filing: 26.04.2023
(51) Int. Cl.: A24C 5/01, A24D 3/02

(54) **QUICK ADJUSTABLE ROLLER FOR A CRIMPER FOR SHEET MATERIAL**
SCHNELL EINSTELLBARE WALZE FÜR EINEN CRIMPER FÜR BLATTMATERIAL
ROULEAU À RÉGLAGE RAPIDE POUR UNE SERTISSEUSE DE MATÉRIAU EN FEUILLE

(30) Priority: 12.05.2022 EP 22173092
(43) Date of publication of application: 19.03.2025
(73) Proprietor: Philip Morris Products S.A., 2000 Neuchâtel (CH)
(72) Inventor: MELONCELLI, Niki, 20121 Milano (IT); MINELLI, Gastone, 20121 Milano (IT); ULIVI, Pierfrancesco, 20121 Milano (IT); LEONE, Luigi, 20121 Milano (IT)
(74) Representative: HGF
(86) International application number: PCT/EP2023/060907
(87) International publication number: WO 2023/217531

(56) References cited:
- EP-B1- 1 123 247
- GB-A- 1 208 187
- US-A1- 2020 046 015

## Description

The present disclosure relates to an adjustable roller, in particular but not exclusively an adjustable roller for a crimper to crimp, for example, tobacco sheet, polymer sheet or paper sheet, and also to an adjustable bushing for a roller such as a crimping roller.

Equipment in the tobacco industry, like all equipment, is subject to maintenance. Any downtime means a financial loss, so it is crucial to get the equipment up and running again as soon as possible. After any maintenance or troubleshooting where parts have been disassembled and reassembled, the equipment parts must be adjusted with respect to each other. Production lines for tobacco products, including heat-not-burn aerosol-generating products, often include units in which sheets of material are passed between at least two rollers. The sheets of material may be unwound from bobbins to feed the rollers. A particular example is a crimping unit, in which first and second substantially cylindrical crimping rollers each having a longitudinal axis of rotation and each provided with a plurality of substantially parallel circumferential ridges about the external surfaces of the cylindrical crimping rollers are arranged in close proximity to each other with the first roller substantially parallel to the second roller such that the ridges of first roller interleave with the ridges of the second roller along a tangential plane where the external surfaces of the first and second rollers are in closest proximity. A sheet of material, for example a sheet of polymer material or a sheet of homogenized tobacco material, is passed between the first and second rollers and crimped by the interleaving circumferential ridges. It will be appreciated that the cylindrical crimping rollers must be adjusted in the micrometre range so as to ensure that the spacing between the external surfaces of the rollers at the tangential plane is substantially uniform in a direction parallel to the longitudinal axes of the rollers, with the ridges interleaving correctly to define a desired crimping amplitude. If the spacing is too narrow, the ridges may cut through the sheet of material, and if the spacing is too wide, the sheet of material may not be crimped correctly. Moreover, if the spacing is not substantially uniform along the lengths of the first and second rollers, then the sheet of material may not be crimped uniformly across its width. Adjustment of the rollers is particularly time-consuming and requires skilled maintenance personnel, as otherwise tolerances may be unintentionally exceeded, which will degrade the overall quality of the product being manufactured. Tolerances are typically on a micrometre scale, which requires a high level of precision in adjusting the crimping rollers.

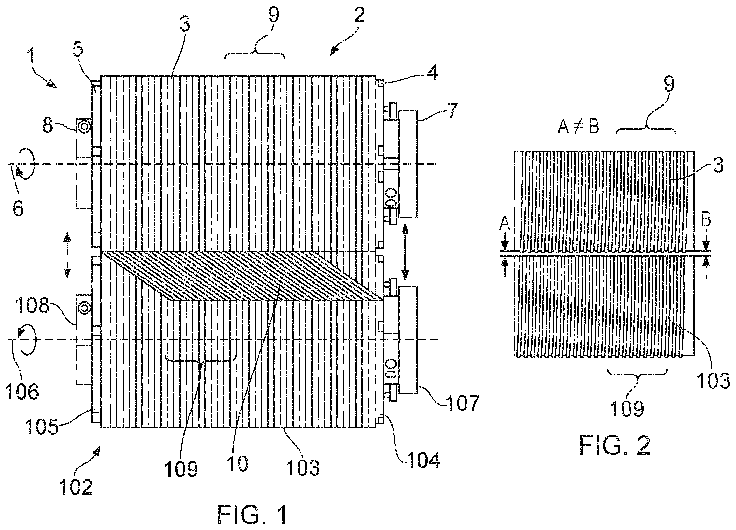

Figure 1 shows a prior art crimping unit comprising first and second crimping rollers, for example as disclosed in US 10,888,118. A continuous sheet of material is fed into the crimping unit between the first and second crimping rollers. The two crimping rollers are mainly tubular in shape and are mounted with two flanges on the outer ends of the crimping roller. A shaft is mounted along the longitudinal axis of each crimping roller as well as the axes of the mounting flanges, and the crimping roller can be driven by rotating the shaft, for example by way of an electric motor. The shaft is mounted on a support frame. This design of several parts assembled, as with any system, results in an accumulation of tolerances that must be readjusted by the maintenance personnel. The adjustment of the crimping rollers to each other takes time and has to be executed with the highest precision. Moreover, adjustment of the crimping rollers is a highly-skilled task that can take considerable time. US2020/046 015 A1 discloses an adjustable roller for a crimper and a method of adjusting an orientation of a longitudinal axis of such a roller according to the preamble of independent claims 1 and 11.

According to a first aspect of the present invention, there is provided an adjustable roller for a crimper for sheet material, comprising:
a substantially cylindrical exterior portion having a first end and a second end with a longitudinal axis of rotation extending between the first end and the second end;
a first bushing mounted inside the first end of the roller and a second bushing mounted inside the second end of the roller;
wherein the first bushing and the second bushing each have a respective cylindrical bore with an axis that is parallel to the longitudinal axis of rotation;
wherein at least one of the first bushing and the second bushing is adjustably mounted inside the respective end of the roller such the axis of the at least one of the first bushing and the second bushing is displaceable relative to the longitudinal axis of rotation.

When the roller is mounted on a shaft that extends through the cylindrical bores of the first and second bushings, with the shaft being supported by an external frame, displacement of the axis of one or other or both of the bushings enables fine adjustment of the orientation of the longitudinal axis of rotation of the cylindrical exterior portion to be achieved without having to adjust the external frame. In this context, fine adjustment means an adjustment on a sub-millimetre scale in the range of a few hundredths of micrometres and below.

In certain embodiments, a gross adjustment of the orientation of the longitudinal axis of rotation is obtained by adjusting the support of the shaft in the external frame, and a fine adjustment of the orientation of the longitudinal axis of rotation is obtained by a subsequent adjustment of one or other or both of the bushings.

Embodiments of the present disclosure enable quick and easy adjustment of the longitudinal axis of rotation when the roller is first assembled, or when the roller is re-assembled after being taken apart for maintenance. It will be appreciated that each component of the mechanism will have a predetermined engineering tolerance. The engineering tolerances include permissible variations in size of the components, permissible eccentricities of axes of rotation, and permissible variations of diameter along longitudinal axes, among other factors. The various engineering tolerances in a system combine with each other in a complex tolerance stacking or stack-up process, which means that small individual tolerances can add up to a much larger overall tolerance. Embodiments of the present disclosure provide a quick and easy mechanism to compensate for the stacked tolerances in a production environment. This is particularly true for interleaving crimping rollers, where the engineering tolerances during production may be on a micrometre scale.

The at least one of the first bushing and the second bushing may be mounted inside the respective end of the roller with a predetermined amount of play in a plane perpendicular to the longitudinal axis, such that the at least one of the first bushing and the second bushing is adjustably fixable relative to the respective end of the roller by a plurality of adjustable fixings.

The predetermined amount of play allows for displacement of the at least one of the first bushing and the second bushing relative to the longitudinal axis of rotation of the substantially cylindrical exterior portion, and the adjustable fixings allow the at least one of the first bushing and the second bushing to be adjustably fixed at a desired displacement.

The plurality of adjustable fixings may be disposed circumferentially about the at least one of the first bushing and the second bushing. The plurality of adjustable fixings may be evenly circumferentially spaced about the at least one of the first bushing and the second bushing. Adjustment of one of the adjustable fixings may be made while simultaneously making a compensating adjustment in another of the adjustable fixings, for example at an opposite circumferential part of the circumference of the bushing. This permits displacement of the bushing relative to the longitudinal axis of the substantially cylindrical outer portion without the bushing becoming loose within the respective end of the roller.

The plurality of adjustable fixings may comprise a plurality of set screws. The substantially cylindrical exterior portion may be provided with a plurality of radially-oriented, circumferentially-spaced threaded bores at the first end or the second end or both the first end and the second end. The plurality of set screws may be adjustably rotatable within the threaded bores so as to hold the respective first bushing or second bushing securely in place relative to the respective first end or second end at selectable different displacements of the bushing axis relative to the longitudinal axis of rotation.

The plurality of adjustable fixings may comprise at least three adjustable fixings. The plurality of adjustable fixings may comprise at least four adjustable fixings. The plurality of adjustable fixings may comprise three adjustable fixings. The plurality of adjustable fixings may comprise four adjustable fixings. Where three adjustable fixings are provided, these may be disposed at 120 degrees circumferential positions relative to each other. Where four adjustable fixings are provided, these may be disposed at 90 degrees circumferential positions relative to each other. Four adjustable fixings provides a good balance between accurate displacement and simplicity of adjustment.

In an alternative embodiment, the axis of the at least one of the first bushing and the second bushing may be offset from or skew to the longitudinal axis of rotation; and the at least one of the first bushing and the second bushing may be rotatably adjustable relative to the cylindrical exterior portion so as to allow the axis of the at least one of the first bushing and the second bushing to be moved along an orbital path about the longitudinal axis during adjustment.

By adjustably rotating the at least one of the first bushing and the second bushing relative to the cylindrical exterior portion, the axis of the at least one of the first bushing and the second bushing can be moved along an orbital path about the longitudinal axis of rotation of the substantially cylindrical portion. When the roller is mounted on a shaft that extends through the cylindrical bores of the first bushing and the second bushing, with the shaft being supported by an external frame, rotation of one or other or both of the bushings relative to the cylindrical exterior portion enables fine adjustment of the orientation of the longitudinal axis of rotation to be achieved without having to adjust the external frame.

In certain embodiments, the displacement of the axis of the at least one of the first bushing or the second bushing from the longitudinal axis of rotation may be up to 1mm, optionally up to 0.5mm, optionally up to 0.1mm, optionally up to 0.05mm. In currently preferred embodiments, the displacement is up to 0.1mm, preferably up to 0.05mm.

Where adjustment is made by rotating the bushing relative to the substantially cylindrical exterior portion, even a large (up to 180 degrees) rotation of the bushing relative to the substantially cylindrical outer surface may have a relatively small impact on the orientation of the longitudinal axis of rotation, allowing extremely fine adjustment of the orientation to be achieved through relatively large scale rotational adjustment of the bushing, thereby facilitating adjustment even by less skilled personnel.

In some embodiments, only one of the first bushing and the second bushing is adjustably mounted inside the respective end of the roller. In these embodiments, displacement of the bushing relative to the longitudinal axis of the cylindrical exterior portion is possible only at one end of the roller. Alternatively, both of the first bushing and the second bushing may be adjustably mounted inside the respective ends of the roller, allowing displacement of the bushings at both ends of the roller.

In embodiments where the axes of the first bushing and the second bushing are offset from, skew to, or both offset from and skew to the longitudinal axis of rotation, the offset, skewness, or offset and skewness may be by the same amount for both the first bushing and the second bushing. Alternatively, the axes of the first bushing and the second bushing may be offset from, skew to, or offset from and skew to the longitudinal axis of rotation by different amounts.

At least one end of the substantially cylindrical exterior portion may be provided with a flange portion to receive the respective first bushing or second bushing.

The at least one of the first bushing and the second bushing may be releasably fastened to the respective flange portion by a plurality of bolts.

The at least one of the first bushing and the second bushing may be rotatably adjustable in the respective flange portion by loosening the plurality of bolts, rotating the bushing by a predetermined amount, and then tightening the plurality of bolts.

The flange portion and the at least one of the first bushing and the second bushing may each be provided with indicia to indicate an amount of relative rotation between the flange portion and the bushing. The indicia may comprise a numerical scale. The indicia may provide a useful indication to maintenance personnel as to an amount of rotation and hence a degree of adjustment of the first bushing or the second bushing.

The at least one of the first bushing and the second bushing may be provided with a plurality of recesses or projections configured to receive or be received by a tool for rotatably adjusting the bushing. The tool may take the form of a wrench having projections or recesses complementary to the recesses or projections formed in the at least one of the first bushing or the second bushing.

The offset or skewness or offset and skewness of the axis of the at least one of the first bushing and the second bushing from the longitudinal axis of rotation may be provided by an eccentricity in the respective flange portion.

The offset or skewness or offset and skewness of the axis of the at least one of the first bushing and the second bushing from the longitudinal axis of rotation may be provided by an eccentricity in the bushing.

The offset of the axis of the at least one of the first bushing and the second bushing from the longitudinal axis of rotation may be no greater than 1mm, optionally no greater than 0.5mm, optionally no greater than 0.1mm, optionally no greater than 0.05mm.

The substantially cylindrical exterior portion may have a length of 200mm to 500mm along the longitudinal axis, optionally a length of 300mm to 400mm along the longitudinal axis.

The substantially cylindrical exterior portion may have a diameter of 100mm to 300mm, optionally a diameter of 150mm to 250mm.

The substantially cylindrical exterior portion may be provided with a plurality of substantially parallel circumferential ridges. The circumferential ridges may be configured to apply a desired crimping pattern, for example to a tobacco sheet, to a polymer sheet or to a paper sheet.

The substantially cylindrical exterior portion, the first bushing and the second bushing may be made of any appropriate material. Exemplary materials include steel and stainless steel, optionally with a coating of manganese phosphate. The same or similar materials may be used to make the flange portion. The adjustable fixings or set screws may also be made of steel, or of another metal or alloy as appropriate.

According to a second aspect of the present invention, there is provided a roller unit for a crimper for sheet material comprising a first adjustable roller according to the first aspect, in combination with a second roller comprising a substantially cylindrical exterior portion having a first end and a second end with a longitudinal axis of rotation extending between the first and second ends, the longitudinal axis of the second roller being substantially parallel with the longitudinal axis of the first roller, and the first and second rollers being moveable relative to each other so as to bring the cylindrical exterior surfaces into close proximity with each other along a tangential plane between the cylindrical exterior surfaces.

Because a fine adjustment of the longitudinal axis of rotation of the first roller relative to the longitudinal axis of rotation of the second roller is made possible by the adjustable displacement of the at least one of the first bushing or the second bushing of the first roller, it is possible to obtain a good alignment of the cylindrical exterior surfaces along the tangential plane.

A fine adjustment of an orientation of the longitudinal axis of rotation of the substantially cylindrical exterior portion of the first roller relative to an orientation of the longitudinal axis of rotation of the substantially cylindrical exterior portion of the second roller may be obtained by displacing the axis of the at least one of the first bushing and the second bushing relative to the longitudinal axis of rotation of the substantially cylindrical exterior portion of the first roller.

A fine adjustment of an orientation of the longitudinal axis of rotation of the substantially cylindrical exterior portion of the first roller relative to an orientation of the longitudinal axis of rotation of the substantially cylindrical exterior portion of the second roller may be obtained by rotating the at least one bushing of the first roller within the substantially cylindrical exterior portion of the first roller.

The second roller may comprise a substantially cylindrical exterior portion having a first end and a second end with a longitudinal axis of rotation extending between the first end and the second end; a first bushing mounted inside the first end of the roller and a second bushing mounted inside the second end of the roller; wherein the first bushing and the second bushing each have a respective cylindrical bore with an axis that is parallel to the longitudinal axis of rotation; and wherein at least one of the first bushing and the second bushing is adjustably mounted inside the respective end of the roller such the axis of the at least one of the first bushing and the second bushing is displaceable relative to the longitudinal axis of rotation.

Accordingly, both the first roller and the second roller may be adjustable without having to reposition or adjust a frame or respective frames in which the first and second rollers are mounted by way of shafts.

The substantially cylindrical exterior surfaces of the first and second rollers may each be provided with a plurality of substantially parallel circumferential ridges. The circumferential ridges of the first roller may interleave with the circumferential ridges of the second roller at the tangential plane when the first and second rollers are correctly aligned. In this way, a crimping roller unit is obtained, in which a sheet of material may be passed between the rollers to be crimped. By enabling a fine adjustment of the relative orientations of the axes of rotation of the first and second rollers, it is possible to ensure that the sheet of material is crimped evenly across its width.

When the cylindrical exterior surfaces of the first roller and the second roller are brought into close proximity with each other along a tangential plane between the cylindrical exterior surfaces, the circumferential ridges of the first roller mesh with the circumferential ridges of the second roller at the tangential plane between the first roller and the second roller. A "crimping depth" is thereby defined, the crimping depth being a radial measure of distance between respective peaks of the circumferential ridges of the first roller and the second roller on either side of the tangential plane. The fine adjustment thus targets an even desired crimping depth across the width of the crimping rollers where the radial distance between the axis of the first roller and the maximum of the peaks of the circumferential ridges of the first roller on one side of the tangential plane is greater than the radial distance between the axis of the first roller and the maximum of the peaks of the circumferential ridges of the second roller on the other side of the tangential plane. Advantageously, the circumferential ridges of the first roller interleave with the circumferential ridges of the second roller, and the circumferential ridges of each roller are respectively spaced in the axial direction such that a peak of a circumferential ridge of the first roller is substantially aligned with a corresponding trough between circumferential ridges of the second roller, and vice versa.

Preferably, the crimping depth is between 50 and 500 micrometres, more preferably, between 100 and 300 micrometres.

According to a third aspect of the present invention, there is provided a combination of an inner bushing and an outer flange portion, the outer flange portion configured for fitting in an end of an adjustable roller for a crimper for sheet material comprising a substantially cylindrical exterior portion having a first end and a second end with a longitudinal axis of rotation extending between the first end and the second end; wherein the bushing has a cylindrical bore with an axis that is parallel to the longitudinal axis of rotation when the flange portion is fitted in the end of the adjustable roller; and wherein the bushing is adjustably mounted within the flange portion so as to allow the axis of the bushing to be displaced relative to the longitudinal axis of rotation.

The combination may be retrofitted in an existing roller so as to provide adjustability.

The bushing may be mounted inside the flange portion with a predetermined amount of play in a plane perpendicular to the longitudinal axis of rotation. The bushing may be adjustably fixable relative to the flange portion by a plurality of adjustable fixings.

The bushing may be rotatably adjustable relative to the flange portion so as to allow the axis of the bushing to be moved along an orbital path about the longitudinal axis during adjustment.

An offset or skewness or offset and skewness of the axis of the bushing from the longitudinal axis of rotation may be provided by an eccentricity in the flange portion. An offset or skewness or offset and skewness of the axis of the bushing from the longitudinal axis of rotation may be provided by an eccentricity in the bushing.

The bushing may be releasably fastened to the respective flange portion by a plurality of bolts. The bushing may be rotatably adjustable in the respective flange portion by loosening the plurality of bolts, rotating the bushing by a predetermined amount, and then tightening the plurality of bolts.

The flange portion and the bushing may each be provided with indicia to indicate an amount of relative rotation between the flange portion and the bushing. The indicia may comprise a numerical scale.

The bushing may be provided with a plurality of recesses or projections configured to receive or be received by a tool for rotatably adjusting the bushing.

According to a fourth aspect of the present invention, there is provided a method of adjusting an orientation of a longitudinal axis of a roller for a crimper for sheet material, wherein the roller comprises:
a substantially cylindrical exterior portion having a first end and a second end with a longitudinal axis of rotation extending between the first end and the second end;
a first bushing mounted inside the first end of the roller and a second bushing mounted inside the second end of the roller;
wherein the first bushing and the second bushing each have a respective cylindrical bore with an axis that is parallel to the longitudinal axis of rotation; and
wherein at least one of the first bushing and the second bushing is adjustably mounted inside the respective end of the roller such the axis of the at least one of the first bushing and the second bushing is displaceable relative to the longitudinal axis of rotation;
the method comprising adjusting a displacement of the at least one of the first bushing and the second bushing relative to the cylindrical exterior portion so as to displace the axis of the at least one of the first bushing and the second bushing relative to the longitudinal axis.

The axis of the at least one of the first bushing and the second bushing may be displaced from the longitudinal axis of rotation by up to 1mm, optionally up to 0.5mm, optionally up to 0.1mm, optionally up to 0.05mm.

The at least one of the first bushing and the second bushing may be mounted inside the respective end of the roller with a predetermined amount of play in a plane perpendicular to the longitudinal axis. The at least one of the first bushing and the second bushing may be adjustably fixable relative to the respective end of the roller by a plurality of adjustable fixings. At least one of the first bushing and the second bushing may be adjustably displaced relative to the cylindrical exterior portion by adjusting the adjustable fixings.

The plurality of adjustable fixings may be disposed circumferentially about the at least one of the first bushing and the second bushing. The plurality of adjustable fixings may be evenly circumferentially spaced about the at least one of the first bushing and the second bushing.

The plurality of adjustable fixings may comprise a plurality of set screws.

The substantially cylindrical exterior portion may be provided with a plurality of radially-oriented, circumferentially-spaced threaded bores at the first end or the second end or both the first end and the second end. The plurality of set screws may be adjustably rotated within the threaded bores so as to hold the respective first bushing or second bushing securely in place relative to the respective first end or second end at selectable different displacements of the bushing axis relative to the longitudinal axis of rotation.

The plurality of adjustable fixings may comprise at least three adjustable fixings, or may comprise at least four adjustable fixings.

The axis of the at least one of the first bushing and the second bushing may be offset from or skew to or both offset from and skew to the longitudinal axis of rotation. The at least one of the first bushing and the second bushing may be rotatably adjusted relative to the cylindrical exterior portion such that the axis of the at least one of the first bushing and the second bushing is moved along an orbital path about the longitudinal axis during adjustment.

In some embodiments, only one of the first bushing and the second bushing is rotatably adjusted relative to the respective end of the roller with the axis of the bushing offset from or skew to or both offset from and skew to the longitudinal axis of rotation.

In some embodiments, both the first bushing and the second bushing are rotatably adjusted relative to the respective ends of the roller with the axes of the bushings offset from or skew to or both offset from and skew to the longitudinal axis of rotation.

The axes of the first bushing and the second bushing may be offset from or skew to or both offset from and skew to the longitudinal axis of rotation by the same amount.

The axes of the first bushing and the second bushing may be offset from or skew to or both offset from and skew to the longitudinal axis of rotation by different amounts.

At least one end of the substantially cylindrical exterior portion may be provided with a flange portion to receive the respective first bushing or second bushing.

The bushing may be releasably fastened to the respective flange portion by a plurality of bolts. The bushing may be rotatably adjusted in the respective flange portion by loosening the plurality of bolts, rotating the bushing by a predetermined amount, and then tightening the plurality of bolts.

The flange portion and the bushing may each provided with indicia to indicate an amount of relative rotation between the flange portion and the bushing. The indicia may comprise a numerical scale.

The at least one of the first bushing and the second bushing may be provided with a plurality of recesses or projections. A tool may be engaged with the plurality of recesses or projections in order to rotatably adjust the bushing.

The offset or skewness or both offset and skewness of the axis of the at least one of the first bushing and the second bushing from the longitudinal axis of rotation may be provided by an eccentricity in the respective flange portion.

The offset or skewness or both offset and skewness of the axis of the at least one of the first bushing and the second bushing from the longitudinal axis of rotation may be provided by an eccentricity in the bushing.

The offset of the axis of the at least one of the first bushing and the second bushing from the longitudinal axis of rotation may be no greater than 1mm, optionally no greater than 0.5mm, optionally no greater than 0.1mm, optionally no greater than 0.05mm.

The substantially cylindrical exterior portion may have a length of 200mm to 500mm along the longitudinal axis, optionally a length of 300mm to 400mm along the longitudinal axis.

The substantially cylindrical exterior portion may have a diameter of 100mm to 300mm, optionally a diameter of 150mm to 250mm.

The substantially cylindrical exterior portion may be provided with a plurality of substantially parallel circumferential ridges.

As used herein, the term "adjustable" describes an element that can be moved between at least two different positions, the element remaining in place at the position to which it is adjusted unless deliberately adjusted to another position.

As used herein, the term "bushing" denotes a substantially cylindrical member having a longitudinal bore to receive a shaft, and configured to be fitted inside an outer substantially cylindrical tubular member.

As used herein, the term "corrugations" denotes a plurality of substantially parallel ridges formed from alternating peaks and troughs joined by corrugation flanks. This includes, but is not limited to, corrugations having a square wave profile, sinusoidal wave profile, triangular profile, sawtooth profile, or any combination thereof.

As used herein, the term "crimper" denotes a machine in which a sheet is passed between at least a pair of corrugated rollers so as to impart a plurality of corrugations to the sheet.

As used herein, the term "crimping depth" denotes a radial measure of distance between respective peaks of the circumferential ridges of a first roller and a second roller on either side of a tangential plane passing between the first roller and the second roller when the circumferential ridges of the first rollers and the second roller interleave at the tangential plane. The crimping depth is the maximum distance between peaks of the circumferential ridges of the first roller and peaks of the circumferential ridges of the second roller at the tangential plane when the circumferential ridges of the respective rollers interleave with each other.

As used herein, the term "fixable" describes an element that can be releasably fixed in place relative to another element so that there is no relative movement between the elements.

As used herein, the term "flange portion" denotes an internal radial lip or rim of the substantially cylindrical exterior portion that provides an attachment surface for the first bushing or the second bushing. The flange portion may be integrally formed with the cylindrical exterior portion, or may be a separate component that is attached to the cylindrical exterior portion.

As used herein, the term "interleave" denotes that the corrugations of the first and second rollers at least partially mesh. This includes arrangements in which the corrugations of one or both of the rollers are symmetrical or asymmetrical. The corrugations of the rollers may be substantially aligned, or at least partially offset. The peak of one or more corrugations of the first or second rollers may interleave with the trough of a single corrugation of the other of the first and second rollers. The corrugations of the first and second rollers may interleave such that substantially all of the corrugation troughs of one of the first and second rollers each receive a single corrugation peak of the other of the first and second rollers, at least for a single or multiple sections along the circumference of the roller.

As used herein, the term "orbital path" denotes a substantially circular path centred on an axis of rotation. Movement along the orbital path includes movement along just a portion of the orbital path, for example along an arc of the orbital path.

As used herein, the term "polymer sheet" denotes a sheet made of polymer, for example polylactic acid.

As used herein, the term "set screw" denotes a threaded element that can be moved in either direction along a threaded bore by rotating the set screw, with one end of the set screw projecting from the threaded bore so as to contact and hold in place an element that is to be adjusted. A set screw may have a head, or may be headless, such as a grub screw.

As used herein, the term "sheet" denotes a laminar element having a width and length substantially greater than the thickness thereof.

As used herein, the term "substantially cylindrical" denotes a cylindrical shape of substantially circular cross-section with a substantially uniform diameter along a longitudinal length of the cylinder. The term "substantially cylindrical" encompasses generally cylindrical elements having surface features, for example corrugations, that have a depth or height that is at least one order of magnitude smaller than the diameter of the cylindrical element.

As used herein, the term "tobacco sheet" denotes a sheet made of homogenised tobacco material, formed by agglomerating particulate tobacco with optional binders.

The invention is defined in the claims.

Examples will now be further described with reference to the figures in which:
Figure 1 shows a perspective view of an arrangement of two crimping rollers within a crimping unit;
Figure 2 shows a more detailed view of the interleaving corrugations of the crimping rollers of Figure 1, the crimping rollers being imperfectly aligned;
Figure 3 shows a longitudinal cross section through an adjustable roller of the present disclosure at a first rotational position;
Figure 4 shows an end elevation of the left hand end of the adjustable roller of Figure 3;
Figure 5 shows a longitudinal cross section through the adjustable roller of Figure 3 at a second rotational position;
Figure 6 shows an axial cross section through the left hand end of the adjustable roller of Figure 5;
Figure 7 shows a perspective view of an alternative adjustable roller of the present disclosure;
Figure 8 shows a longitudinal cross section through the adjustable roller of Figure 7;
Figure 9 shows an end elevation of the left hand end of the adjustable roller of Figure 7;
Figures 10 to 12 show three stages in the adjustment of the adjustable roller of Figure 7;
Figures 13 and 14 show longitudinal cross sections through the right hand end of the adjustable roller of Figure 7 mounted on a shaft, at two different adjustments;
Figures 15 to 17 show a front elevation, a side elevation and a rear elevation of a flange portion of an adjustable roller of the present disclosure;
Figure 18 shows a front elevation of an alternative flange portion of an adjustable roller of the present disclosure; and
Figures 19 to 21 show a front elevation, a side elevation and a rear elevation of a bushing of an adjustable roller of the present disclosure.

Figure 1 shows a crimping unit 1 comprising a first crimping roller 2 and a second crimping roller 102 mounted in a generally parallel and adjacent arrangement. Each of the first crimping roller 2 and the second crimping roller 102 comprises a substantially cylindrical exterior portion 3, 103 having a first end 4, 104 and a second end 5, 105 with a longitudinal axis of rotation 6, 106 extending between the first end 4, 104 and the second end 5, 105. Each of the first crimping roller 2 and the second crimping roller 102 also comprises a first bushing 7, 107 at the first end 4, 104 and a second bushing 8, 108 at the second end 5, 105. The first bushings 7, 107 and second bushings 8, 108 are fixedly mounted inside the respective substantially cylindrical exterior portion 3, 103. Each of the first bushings 7, 107 and the second bushings 8, 108 has a central bore (not shown) configured to receive a shaft (not shown), such that a first shaft (not shown) passes through the first bushing 7 and the second bushing 8, and a second shaft (not shown) passes through the first bushing 107 and the second bushing 108. The crimping unit 1 is mounted in a frame (not shown), and the first shaft and second shaft can be driven by motors so as to rotate the first crimping roller 2 and the second crimping roller 102 in opposite rotational directions. The cylindrical exterior portion 3, 103 of each of the first roller 2 and the second roller 102 is provided with circumferential corrugations 9, 109 that can interleave with each other along a tangential plane between the cylindrical exterior portions 3, 103 when the first roller 2 is positioned adjacent to the second roller 102, as shown more clearly in Figure 2. A sheet 10 of material, for example a tobacco sheet or polymer sheet, can be fed between the first roller 2 and the second roller 102 so as to crimp the sheet 10 by imparting a corrugated profile to the sheet 10 by way of the interleaving circumferential corrugations 9, 109.

In the illustrated example, the central bores of the first bushing 7 and the second bushing 8 are concentric with the longitudinal axis of rotation 6 of the cylindrical exterior portion 3 of the first roller 2. Likewise, the central bores of the first bushing 107 and the second bushing 108 are concentric with the longitudinal axis of rotation 106 of the cylindrical exterior portion 103 of the second roller 102. This means that the first shaft is coincident with the longitudinal axis of rotation 6 and the second shaft is coincident with the longitudinal axis of rotation 106. As a result, the only way of adjusting the longitudinal axes of rotation 6, 106 is to adjust the mounting of the first and second shafts in the frame, which can be a complex and time-consuming procedure.

As can be seen in Figure 2, if the longitudinal axes of rotation 6, 106 are imperfectly aligned in parallel, the circumferential corrugations 9, 109 will not interleave consistently along the length of the cylindrical exterior portions 3, 103, and may not interleave at all towards one of the ends of the tangential plane. As a result, a sheet 10 that is passed between the first roller 2 and the second roller 102 may not be consistently crimped across the width of the sheet 10.

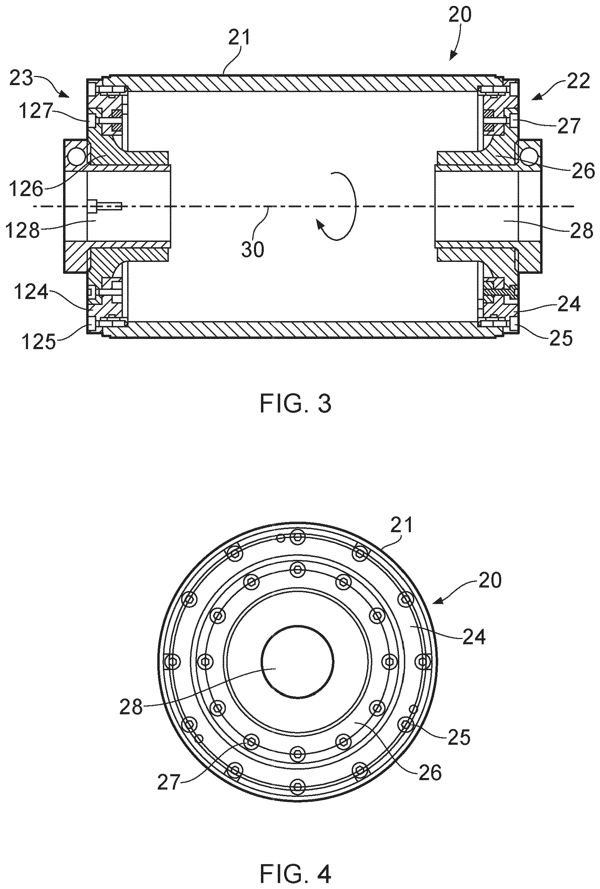

Figure 3 shows a longitudinal cross section through an adjustable roller 20 of an embodiment of the present disclosure at a first rotational position. The adjustable roller 20 comprises a substantially cylindrical exterior portion 21 with a first end 22 and a second end 23 and a longitudinal axis of rotation 30. The circumferential corrugations are not visible as the structural height of the corrugations is below the resolution of the drawing. Figure 4 shows an end elevation of the first end 22 of the adjustable roller 20 of Figure 3. A first flange portion 24 is fitted inside the first end 22 of the cylindrical exterior portion 21 by way of bolts 25. Likewise, a second flange portion 124 is fitted inside the first end 23 of the cylindrical exterior portion 21 by way of bolts 125. A first bushing 26 is fixable to the first flange portion 24 at the first end 22 by way of bolts 27. Likewise, a second bushing 126 is fixable to the second flange portion 124 at the second end 23 by way of bolts 127. The first bushing 26 has a central bore 28. The second bushing 126 has a central bore 128. The central bores 26, 126 are configured to receive a shaft (not shown) that can be rotated by a motor so as to rotate the roller 20. Importantly, at least one of the first bushing 26 and the second bushing 126 is axially displaceable (when the bolts 27, 127 are loosened) relative to the respective flange portion 24, 124, and thus relative to the cylindrical exterior portion 21 and the longitudinal axis of rotation 30. The axial displaceability is made possible by providing a predetermined amount of play between the at least one of the first bushing 26 and the second bushing 126 and the respective flange portion 24, 124 in a plane perpendicular to the longitudinal axis of rotation 30. Each of the central bores 28, 128 (and thus each of the first bushing 26 and the second bushing 126) has its own longitudinal axis of rotation, and the longitudinal axis of rotation of at least one of the central bores 28, 128 (and thus of at least one of the first bushing 26 and the second bushing 126) can thus be radially displaced from the longitudinal axis of rotation 30 of the cylindrical exterior portion 21 by a small amount. Displacing the longitudinal axis of rotation of at least one of the first bushing 26 and the second bushing 126 relative to the longitudinal axis of rotation 30 of the cylindrical exterior portion 21 provides a fine degree of adjustment without having to adjust the mounting of the roller 20 in an external frame (not shown). The adjustment facilitates correct mutual alignment of a pair of rollers 20 when incorporated in a crimping unit as shown in Figure 1.

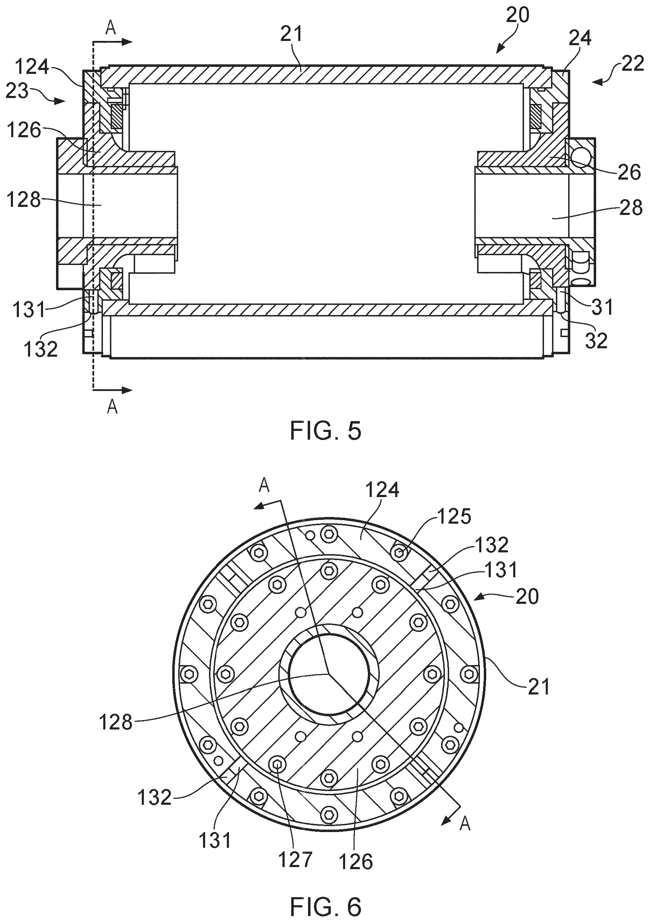

Figure 5 shows a longitudinal cross section through the adjustable roller 20 of Figures 3 and 4 at a different rotational position. Figure 6 shows an axial cross section A-A through the second end 23 of the adjustable roller 20 of Figure 5. Figures 5 and 6 show four adjustable fixings in the form of set screws 31, 131 that are disposed in threaded bores 32, 132 that are radially oriented in at least one of the flange portions 24, 124. The set screws 31, 131 can be moved along the threaded bores 32, 132 in both directions by rotation. The threaded bores 32, 132 are accessible from an exterior circumference of the flange portion 24, 124 so as to permit rotation and adjustment of the set screws 31, 131 using an appropriate tool. In the illustrated embodiment, the threaded bores 32, 132 are disposed at 90 degrees relative to each other about the circumference of the flange portion 24, 124, although it will be appreciated that with three threaded bores 32, 132, an angular spacing of 120 degrees would be appropriate, and similarly for other numbers of threaded bores 32, 132. It can be seen that a very fine and controllable adjustment of the displacement of the at least one of the first bushing 26 and the second bushing 126 relative to the longitudinal axis of rotation 30 of the cylindrical exterior portion 21 can be obtained by adjusting the set screws 31, 131 within the threaded bores 32, 132. The set screws 31, 131 each have an inner end that can project slightly from an inner circumference of the flange portion 24, 124 so as to adjust and hold the at least one of the first bushing 26 and the second bushing 126. The set screws 31, 131 each have an outer end that can be engaged by an appropriate tool (such as a hex key) so as to allow the set screws 31, 131 to be rotated and hence moved along the threaded bores 32, 132 in either direction. A radial displacement of the at least one of the first bushing 26 and the second bushing 126 relative to the longitudinal axis of rotation 30 of the cylindrical exterior portion 21 can thus be achieved without having to adjust the mounting of the roller 20 in an external frame (not shown). With the set screws 31, 131 and threaded bores 32, 132 being arranged in radially opposed positions around the circumference of the flange portion 24, it is possible to make fine and controlled displacements of the at least one of the first bushing 26 and the second bushing 126 by making complementary adjustments of opposing set screws 31, 131. The mechanical advantage obtained by using set screws 31, 131 in threaded bores 32, 132 allows controlled displacement even of heavy components such as the cylindrical exterior portion 21 relative to the at least one of the first bushing 26 and the second bushing 126. By providing a plurality of set screws 31, 131 and threaded bores 32, 132 around the circumference of the flange portion 24, 124, displacement in any radial direction is enabled.

Although it may be possible for the at least one of the first bushing 26 and the second bushing 126 to be held firmly in engagement with the respective flange portion 24, 124, it may be preferred, once the at least one of the first bushing 26 and the second bushing 126 is correctly adjusted, firmly to engage the bushing 26, 126 with the respective flange portion 24, 124 by way of the bolts 27, 127. The bolts 27, 127 may pass through bolt holes that have sufficient radial play with respect to the bolts 27, 127 so as to accommodate radial displacement of the bushing 26, 126 relative to the flange portion 24, 124 before the bolts 27, 127 are tightened.

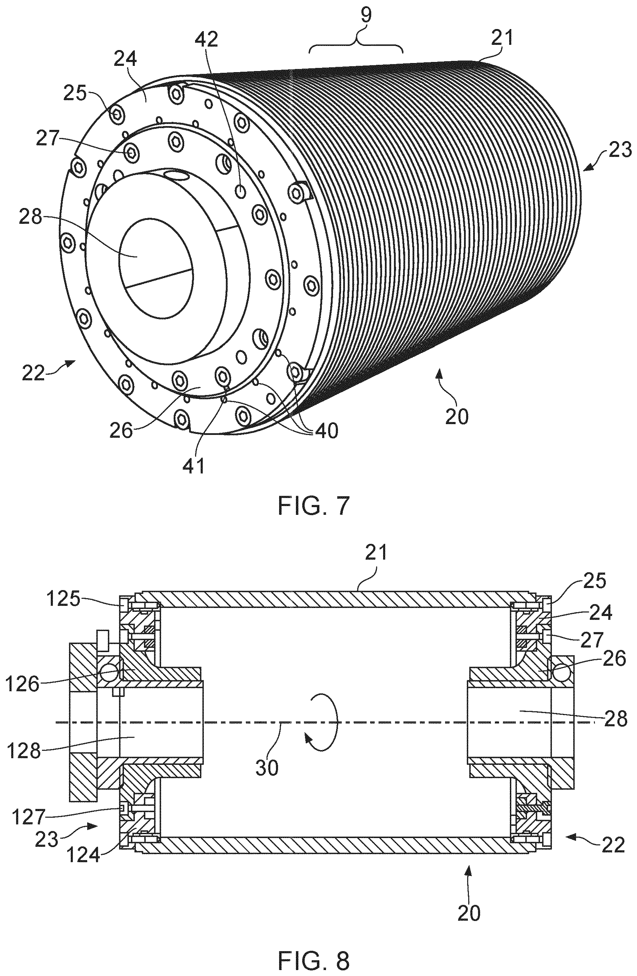

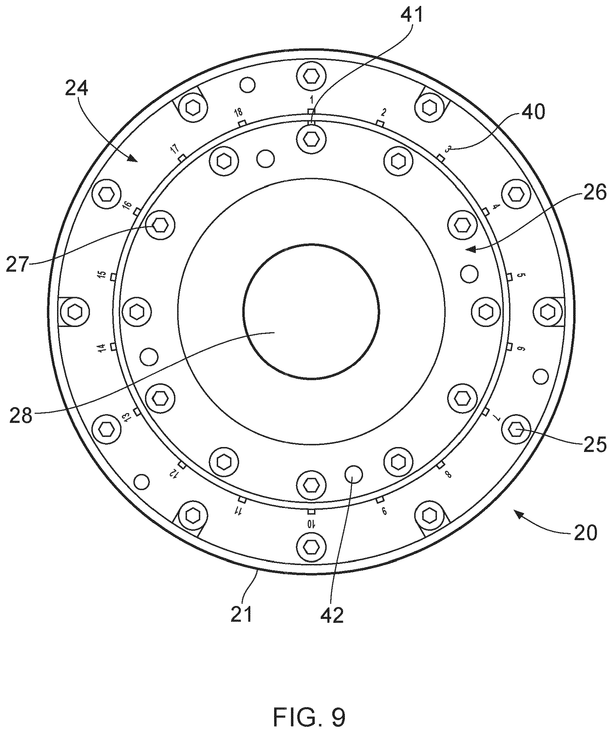

Figure 7 shows a perspective view of an adjustable roller 20 of another embodiment of the present disclosure, with Figure 8 showing a longitudinal cross section through the adjustable roller 20 of Figure 7 and Figure 9 showing an end elevation of the left hand end of the adjustable roller 20 of Figure 7. Similarly to the previous embodiment, the adjustable roller 20 of Figures 7 to 9 has a substantially cylindrical exterior portion 21 with a first end 22 and a second end 23 and a longitudinal axis of rotation 30. A first flange portion 24 is fitted inside the first end 22 of the cylindrical exterior portion 21 by way of bolts 25. Likewise, a second flange portion 124 is fitted inside the first end 23 of the cylindrical exterior portion 21 by way of bolts 125. A first bushing 26 is fixable to the first flange portion 24 at the first end 22 by way of bolts 27. Likewise, a second bushing 126 is fixable to the second flange portion 124 at the second end 23 by way of bolts 127. The first bushing 26 has a central bore 28. The second bushing 126 has a central bore 128. The central bores 26, 126 are configured to receive a shaft (not shown) that can be rotated by a motor so as to rotate the roller 20. In this embodiment, the central bore 28, 128 of at least one of the first bushing 26 and the second bushing 126 has an axis that is slightly radially offset from the longitudinal axis of rotation 30 of the cylindrical exterior portion 21. The radial offset may be provided by an eccentricity in the flange portion 24, 124, or an eccentricity in the bushing 26, 126, or an eccentricity in both the flange portion 24, 124 and the bushing 26, 126. Accordingly, by rotating the bushing 26, 126 relative to the flange portion 24, 124, the axis of the bushing 26, 126 may be moved along an orbital path about the longitudinal axis of rotation 30. The degree of rotation of the bushing 26, 126 relative to the flange portion 24, 124 is indicated by indicia 40 provided on the flange portion 24, 124 and a marker 41 provided on the bushing 26, 126. In order to allow rotation of the bushing 26, 126 relative to the flange portion 24, 124, the bolts 27, 127 may be removed. Once the bushing 26, 126 has been rotated to a desired position, as indicated by the indicia 40 and the marker 41, the bolts 27, 127 can be reinserted and tightened.

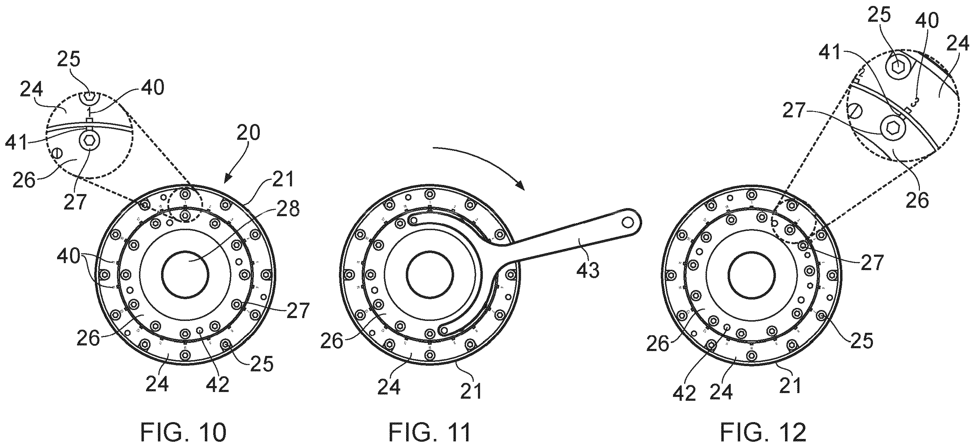

The bushing 26, 126 may be provided with recesses 42 configured to receive corresponding projections of a tool 43 designed to facilitate rotation of the bushing 26, 126 within the flange portion 24, 124, as shown in Figures 10 to 12. The indicia 40 may be in the form of a numerical scale so as to give an easy-to-read indication of the degree of relative rotation. In Figure 10, the bushing 26 is in position "1". The bolts 27 are removed, and a tool 43 is used to rotate the bushing 26 clockwise, as shown in Figure 11. In Figure 12, the bushing 26 has been rotated to position "3", and the bolts 27 have been reinserted and tightened. By moving the axis of the bushing 26 along an orbital path about the longitudinal axis of rotation 30 of the exterior cylindrical portion 21, a fine adjustment of the axis of rotation of the entire roller 20 is made possible, allowing for accurate alignment of one roller 20 against another roller in a crimping unit 1 as shown generally in Figure 1.

It will be appreciated that the eccentricity of the bushing 26, 126 or of the flange 24, 124 is relatively small, for example less than 1mm, or less than 0.5mm, or less than 0.1mm, or less than 0.05mm. Accordingly, even a relatively large rotational displacement of the bushing 26, 126 relative to the flange 24, 124 will have only a small effect on the orientation of the axis of rotation of the entire roller 20. As a result, accurate adjustment is made easier, even for less skilled personnel.

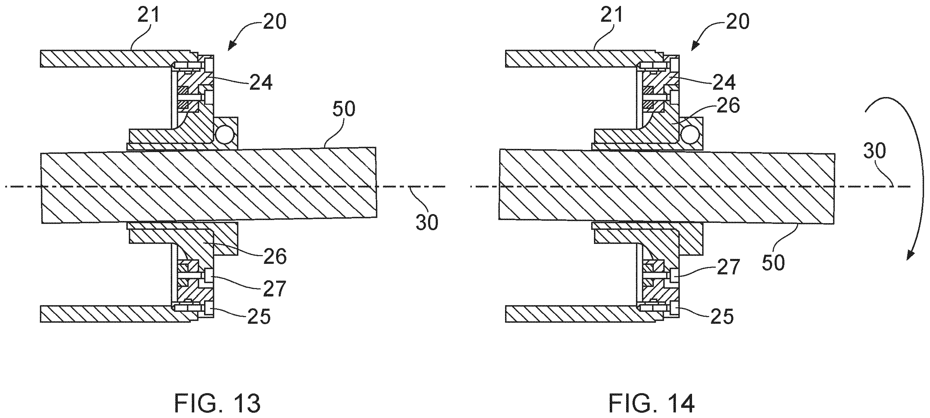

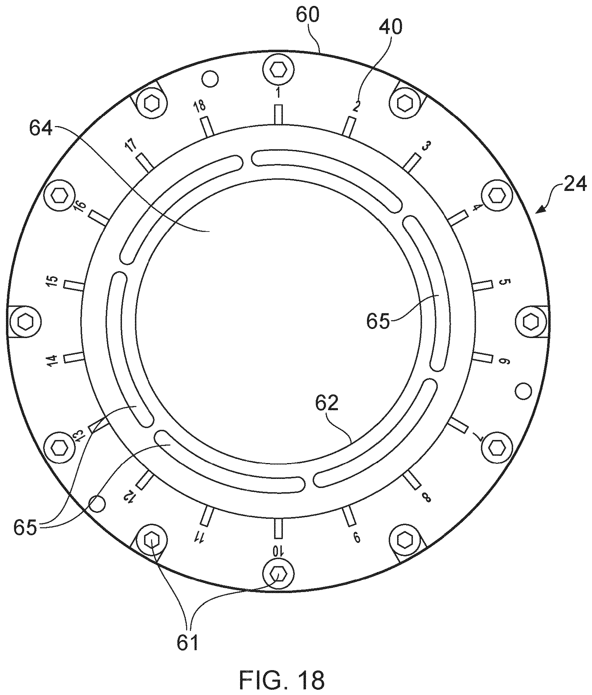

Figures 13 and 14 show an adjustable roller 20 of the type shown in Figures 7 to 10 mounted on a shaft 50 which is driven by a motor (not shown) so as to rotate the roller 20. Features in Figures 18 and 14 are labelled as in Figures 7 to 10. In Figure 18, the bushing 26 is at a first rotational position relative to the flange portion 24 (for example at position "1" in Figure 10), and in Figure 14, the bushing 26 is at a second rotational position relative to the flange portion 24 (for example at position "3" in Figure 12). It can be seen how orbital rotation of the eccentricity in the bushing 26 moves the axis of rotation of the shaft 50 relative to the longitudinal axis of rotation of the exterior cylindrical portion 21 so as to enable fine adjustment of the orientation of the entire roller 20.

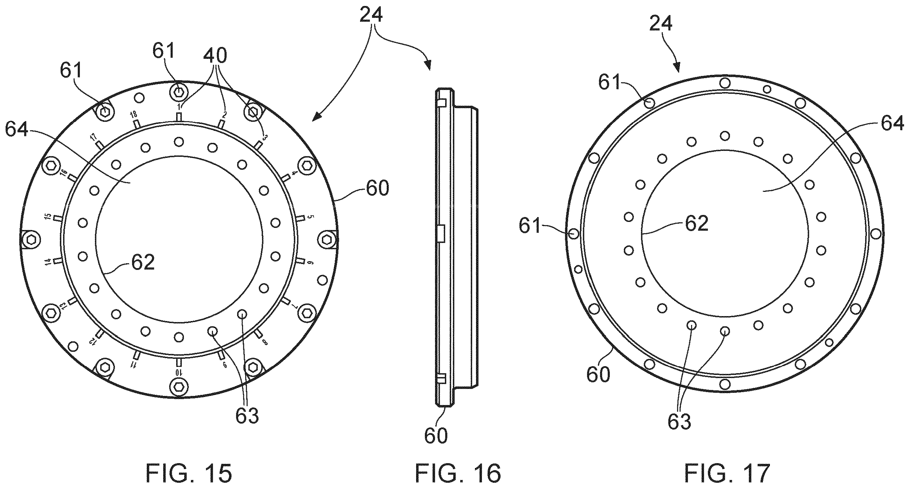

Figures 15 to 17 show, respectively, a front elevation, a side elevation and a rear elevation of a flange portion 24 of an adjustable roller 20 of an embodiment of the present disclosure. The flange portion 24 has an external circumference 60 that fits within an end of the cylindrical exterior portion 21 of the roller 20, with bolt holes 61 to receive the bolts 25 that affix the flange portion 24 to the end 22 of the cylindrical exterior portion 21 of the roller 20. The flange portion 24 has an inner circumference 62 that defines a bore 64 for receiving the bushing 26 (not shown in Figures 15 and 16). Bolt holes 63 are provided around the inner circumference 62 to receive the bolts 27 that connect the bushing 26 to the flange portion 24. Indicia 40 in the form of a numerical scale are provided circumferentially around the flange portion 24. It can be seen in this embodiment that the bolt holes 63 are aligned with the indicia 40. In the illustrated embodiment, there are eighteen indicia 40 and eighteen corresponding bolt holes 63. This means that the bushing 26 can be bolted to the flange portion 24 in any one of eighteen discrete rotational positions. The number of bolt holes 63 may be more than or less than eighteen, but in each case, the rotational positions available for fixing the bushing 26 to the flange portion 24 is defined by the number of bolt holes 63.

Figure 18 shows a front elevation of an alternative flange portion 24. Instead of eighteen individual bolt holes 63, this flange portion 24 has six arcuate cut-outs 65 provided about the inner circumference 62. The number of arcuate cut-outs 65 is not of particular significance. This arrangement allows the bushing 26 to be bolted to the flange portion 24 in a more continuously variable manner, allowing rotational positions between the integral indicia 40 to be obtained.

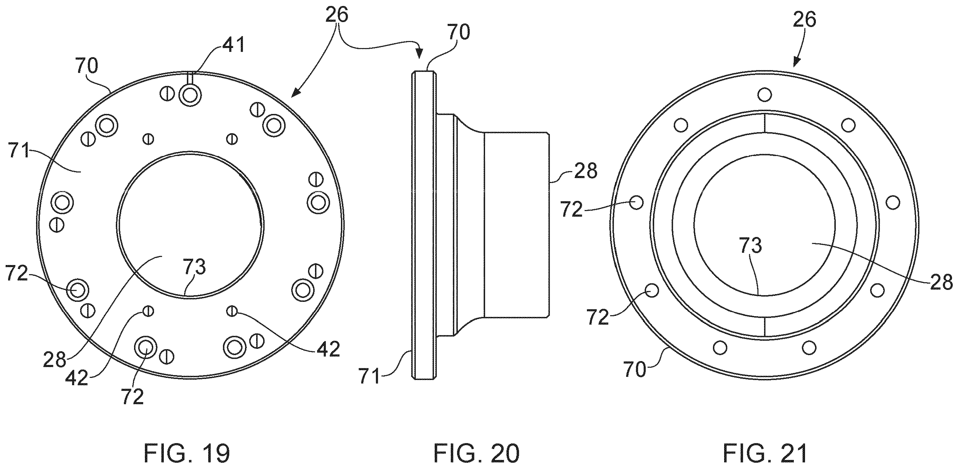

Figures 19 to 21 show, respectively, a front elevation, a side elevation and a rear elevation of a bushing 26 of an adjustable roller 20 of an embodiment of the present disclosure. The bushing 26 has an external circumference 70 and a central bore 28 that is eccentric relative to the external circumference 70. An internal circumference 73 surrounds the central bore 28. The central bore 28 may have an axis that is skew relative to an axis of the external circumference 70. The central bore 28 may have an axis that is radially offset relative to an axis of the external circumference 70. Accordingly, rotation of the bushing 26 relative to the flange portion 24 allows for fine adjustment of the rotational axis of the external cylindrical portion 21 relative to the rotational axis of the shaft 50, as shown in Figures 18 and 14. A front face 71 of the bushing 26 is provided with recesses 42 configured to receive corresponding projections of a tool 43 as shown in Figures 10 to 12. The front face 71 of the bushing is also provided with bolt holes 72 to receive the bolts 27 that connect the bushing 26 to the flange portion 24. A marker 41 is provided on the front face 71 at the external circumference 70 so as, in combination with the indicia 40 on the flange portion 24, to provide an easy-to-read indication of the rotational position of the bushing 26 relative to the flange portion 24.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein. In this context, therefore, a number A is understood as A ± 5% of A. Within this context, a number A may be considered to include numerical values that are within general standard error for the measurement of the property that the number A modifies. The number A, in some instances as used in the appended claims, may deviate by the percentages enumerated above provided that the amount by which A deviates does not materially affect the basic and novel characteristic(s) of the claimed invention. Also, all ranges include the maximum and minimum points disclosed and include any intermediate ranges therein, which may or may not be specifically enumerated herein.

## Claims

1. An adjustable roller (20) for a crimper for sheet material, comprising:
a substantially cylindrical exterior portion (21) having a first end (22) and a second end (23) with a longitudinal axis of rotation (30) extending between the first end (22) and the second end (23);
a first bushing (26) mounted inside the first end (22) of the roller and wherein the first bushing (26) has a cylindrical bore (28) with an axis that is parallel to the longitudinal axis of rotation (30);
**characterized in that**
a second bushing (126) is mounted inside the second end (23) of the roller (20);
the second bushing (126) has a cylindrical bore (128) with an axis that is parallel to the longitudinal axis of rotation (30);
wherein at least one of the first bushing (26) and the second bushing (126) is adjustably mounted inside the respective end (22, 23) of the roller (20) such the axis of the at least one of the first bushing (26) and the second bushing (126) is displaceable relative to the longitudinal axis of rotation (30).

2. The adjustable roller according to claim 1, wherein the axis of the at least one of the first bushing and the second bushing is displaceable from the longitudinal axis of rotation by up to 1mm, optionally up to 0.5mm, optionally up to 0.1mm, optionally up to 0.05mm.

3. The adjustable roller according to claim 1 or 2, wherein the at least one of the first bushing and the second bushing is mounted inside the respective end of the roller with a predetermined amount of play in a plane perpendicular to the longitudinal axis, and wherein the at least one of the first bushing and the second bushing is adjustably fixable relative to the respective end of the roller by a plurality of adjustable fixings.

4. The adjustable roller according to claim 3, wherein the plurality of adjustable fixings comprises a plurality of set screws, wherein the substantially cylindrical exterior portion is provided with a plurality of radially-oriented, circumferentially-spaced threaded bores at the first end or the second end or both the first end and the second end, and wherein the plurality of set screws are adjustably rotatable within the threaded bores so as to hold the respective first bushing or second bushing securely in place relative to the respective first end or second end at selectable different displacements of the bushing axis relative to the longitudinal axis of rotation.

5. The adjustable roller according to claim 1, wherein the axis of the at least one of the first bushing and the second bushing is offset from or skew to or both offset from and skew to the longitudinal axis of rotation; and
wherein the at least one of the first bushing and the second bushing is rotatably adjustable relative to the cylindrical exterior portion so as to allow the axis of the at least one of the first bushing and the second bushing to be moved along an orbital path about the longitudinal axis during adjustment.

6. The adjustable roller according to claim 5, wherein the offset or skewness or offset and skewness of the axis of the at least one of the first bushing and the second bushing from the longitudinal axis of rotation is provided by an eccentricity in the respective flange portion.

7. The adjustable roller according to claim 5, wherein the offset or skewness or offset and skewness of the axis of the at least one of the first bushing and the second bushing from the longitudinal axis of rotation is provided by an eccentricity in the bushing.

8. The adjustable roller according to any one of claims 5 to 7, wherein the offset of the axis of the at least one of the first bushing and the second bushing from the longitudinal axis of rotation is no greater than 1mm, optionally no greater than 0.5mm, optionally no greater than 0.1mm, optionally no greater than 0.05mm.

9. A roller unit for a crimper for sheet material comprising a first adjustable roller according to any preceding claim, in combination with a second roller comprising a substantially cylindrical exterior portion having a first end and a second end with a longitudinal axis of rotation extending between the first and second ends, the longitudinal axis of the second roller being substantially parallel with the longitudinal axis of the first roller, and the first and second rollers being moveable relative to each other so as to bring the cylindrical exterior surfaces into close proximity along a tangential plane between the cylindrical exterior surfaces.

10. The roller unit according to claim 9, wherein a fine adjustment of an orientation of the longitudinal axis of rotation of the substantially cylindrical exterior portion of the first roller relative to an orientation of the longitudinal axis of rotation of the substantially cylindrical exterior portion of the second roller is obtained by displacing the axis of the at least one of the first bushing and the second bushing relative to the longitudinal axis of rotation of the substantially cylindrical exterior portion of the first roller.

11. A method of adjusting an orientation of a longitudinal axis of a roller (20) for a crimper for sheet material, wherein the roller (20) comprises:
a substantially cylindrical exterior portion having a first end (22) and a second end (23) with a longitudinal axis of rotation (30) extending between the first end (22) and the second end (23);
a first bushing (26) mounted inside the first end (22) of the roller (20) and wherein the first bushing (26) has a cylindrical bore (28) with an axis that is parallel to the longitudinal axis of rotation (30);
**characterized in that**
a second bushing (126) is mounted inside the second end (23) of the roller (20);
wherein second bushing (126) has a cylindrical bore (128) with an axis that is parallel to the longitudinal axis of rotation (30); and
wherein at least one of the first bushing (28) and the second bushing (128) is adjustably mounted inside the respective end (22, 23) of the roller (20) such the axis of the at least one of the first bushing (28) and the second bushing (128) is displaceable relative to the longitudinal axis of rotation (30);
the method comprising adjusting a displacement of the at least one of the first bushing (28) and the second bushing (128) relative to the cylindrical exterior portion so as to displace the axis of the at least one of the first bushing (28) and the second bushing (128) relative to the longitudinal axis (30).

12. The method according to claim 11, wherein the axis of the at least one of the first bushing and the second bushing is displaced from the longitudinal axis of rotation by up to 1mm, optionally up to 0.5mm, optionally up to 0.1mm, optionally up to 0.05mm.

13. The method according to claim 11 or 12, wherein the at least one of the first bushing and the second bushing is mounted inside the respective end of the roller with a predetermined amount of play in a plane perpendicular to the longitudinal axis, wherein the at least one of the first bushing and the second bushing is adjustably fixable relative to the respective end of the roller by a plurality of adjustable fixings; and wherein the at least one of the first bushing and the second bushing is adjustably displaced relative to the cylindrical exterior portion by adjusting the adjustable fixings.

14. The method according to any one of claims 11 to 13, wherein prior to adjusting the displacement of the at least one of the first bushing and the second bushing, the roller is adjustably mounted in a crimping machine frame substantially parallel to a second roller, and wherein the roller is adjusted within the frame to a first predetermined tolerance so that the substantially cylindrical portion of the roller is aligned with a corresponding substantially cylindrical portion of the second roller along a tangential plane where external circumferential surfaces of the roller and the second roller are in closest proximity.

15. The method according to claim 14, wherein the roller is adjusted to a second predetermined tolerance, finer than the first predetermined tolerance, by adjusting the displacement of the at least one of the first bushing and the second bushing relative to the cylindrical exterior portion so as to displace the axis of the at least one of the first bushing and the second bushing relative to the longitudinal axis.

## Patentansprüche

1. Einstellbare Walze (20) für eine Wellvorrichtung für Blattmaterial, aufweisend:
einen im Wesentlichen zylindrischen Außenabschnitt (21), aufweisend ein ersten Ende (22) und ein zweites Ende (23) mit einer Längsdrehachse (30), die sich zwischen dem ersten Ende (22) und dem zweiten Ende (23) erstreckt;
eine erste Buchse (26), die innerhalb des ersten Endes (22) der Walze montiert ist, wobei die erste Buchse (26) eine zylindrische Bohrung (28) mit einer Achse aufweist, die parallel zu der Längsdrehachse (30) ist;
**dadurch gekennzeichnet, dass**
eine zweite Buchse (126) innerhalb des zweiten Endes (23) der Walze (20) montiert ist;
die zweite Buchse (126) eine zylindrische Bohrung (128) mit einer Achse aufweist, die parallel zu der Längsdrehachse (30) ist;
wobei wenigstens eine der ersten Buchse (26) und der zweiten Buchse (126) innerhalb des jeweiligen Endes (22, 23) der Walze (20) einstellbar gelagert ist, sodass die Achse der wenigstens einen der ersten Buchse (26) und der zweiten Buchse (126) relativ zu der Längsdrehachse (30) versetzbar ist.

2. Einstellbare Walze nach Anspruch 1, wobei die Achse der wenigstens ersten Buchse oder der zweiten Buchse - oder beider - um bis zu 1 mm, optional um bis zu 0,5 mm, optional um bis zu 0,1 mm, optional um bis zu 0,05 mm von der Längsdrehachse versetzbar ist.

3. Einstellbare Walze nach Anspruch 1 oder 2, wobei die wenigstens eine der ersten Buchse und der zweiten Buchse innerhalb des jeweiligen Endes der Walze mit einem vorbestimmten Spiel in einer Ebene senkrecht zu der Längsachse montiert ist, und wobei die wenigstens eine der ersten Buchse und der zweiten Buchse relativ zu dem jeweiligen Ende der Walze durch eine Vielzahl von einstellbaren Befestigungselementen einstellbar fixierbar ist.

4. Einstellbare Walze nach Anspruch 3, wobei die Vielzahl von einstellbaren Befestigungselementen eine Vielzahl von Stellschrauben umfasst, wobei der im Wesentlichen zylindrische Außenabschnitt mit einer Vielzahl von radial ausgerichteten, in Umfangsrichtung beabstandeten Gewindebohrungen an dem ersten Ende oder an dem zweiten Ende oder sowohl an dem ersten Ende als auch an dem zweiten Ende versehen ist, und wobei die Vielzahl von Stellschrauben innerhalb der Gewindebohrungen einstellbar drehbar sind, um die jeweilige erste Buchse oder die zweite Buchse in Bezug auf das jeweilige erste Ende oder zweite Ende bei wählbaren unterschiedlichen Versätzen der Buchsenachse relativ zu der Längsdrehachse sicher in Position zu halten.

5. Einstellbare Walze nach Anspruch 1, wobei die Achse der wenigstens einer der ersten Buchse und der zweiten Buchse gegenüber der Längsdrehachse versetzt oder schief oder sowohl versetzt als auch schief ist; und
wobei die wenigstens eine der ersten Buchse und der zweiten Buchse relativ zu dem zylindrischen Außenabschnitt drehbar einstellbar ist, um zu ermöglichen, dass die Achse der wenigstens einen der ersten Buchse und der zweiten Buchse während der Einstellung entlang eines Orbitalpfads um die Längsachse bewegt wird.

6. Einstellbare Walze nach Anspruch 5, wobei der Versatz oder die Schiefe oder der Versatz und die Schiefe der Achse der wenigstens einen der ersten Buchse und der zweiten Buchse von der Längsdrehachse durch eine Exzentrizität in dem jeweiligen Flanschabschnitt bereitgestellt wird.

7. Einstellbare Walze nach Anspruch 5, wobei der Versatz oder die Schiefe oder der Versatz und die Schiefe der Achse der wenigstens einen der ersten Buchse und der zweiten Buchse von der Längsdrehachse durch eine Exzentrizität in der Buchse bereitgestellt wird.

8. Einstellbare Walze nach einem der Ansprüche 5 bis 7, wobei der Versatz der Achse der wenigstens einen der ersten Buchse und der zweiten Buchse gegenüber der Längsdrehachse nicht größer als 1 mm, wahlweise nicht größer als 0,5 mm, wahlweise nicht größer als 0,1 mm, wahlweise nicht größer als 0,05 mm ist.

9. Walzeneinheit für eine Wellvorrichtung für Blattmaterial, aufweisend eine erste einstellbare Walze nach einem beliebigen vorhergehenden Anspruch, in Kombination mit einer zweiten Walze, die einen im Wesentlichen zylindrischen Außenabschnitt mit einem ersten Ende und einem zweiten Ende aufweist, wobei sich eine Längsdrehachse zwischen dem ersten und dem zweiten Ende erstreckt, wobei die Längsachse der zweiten Walze im Wesentlichen parallel zu der Längsachse der ersten Walze ist, und die erste und die zweite Walze relativ zueinander beweglich sind, um die zylindrischen Außenflächen entlang einer Tangentialebene zwischen den zylindrischen Außenflächen in unmittelbare Nähe zueinander zu bringen.

10. Walzeneinheit nach Anspruch 9, wobei eine Feineinstellung einer Ausrichtung der Längsdrehachse des im Wesentlichen zylindrischen Außenabschnitts der ersten Walze relativ zu einer Ausrichtung der Längsdrehachse des im Wesentlichen zylindrischen Außenabschnitts der zweiten Walze durch Versetzen der Achse der wenigstens einen der ersten Buchse und der zweiten Buchse relativ zu der Längsdrehachse des im Wesentlichen zylindrischen Außenabschnitts der ersten Walze erhalten wird.

11. Verfahren zum Einstellen einer Ausrichtung einer Längsachse einer Walze (20) für eine Wellvorrichtung für Blattmaterial, wobei die Walze (20) umfasst:
einen im Wesentlichen zylindrischen Außenabschnitt, aufweisend ein ersten Ende (22) und ein zweites Ende (23) mit einer Längsdrehachse (30), die sich zwischen dem ersten Ende (22) und dem zweiten Ende (23) erstreckt;
eine erste Buchse (26), die innerhalb des ersten Endes (22) der Walze (20) montiert ist, und wobei die erste Buchse (26) eine zylindrische Bohrung (28) mit einer Achse aufweist, die parallel zu der Längsdrehachse (30) ist;
**dadurch gekennzeichnet, dass**
eine zweite Buchse (126) innerhalb des zweiten Endes (23) der Walze (20) montiert ist;
wobei die zweite Buchse (126) eine zylindrische Bohrung (128) mit einer Achse aufweist, die parallel zu der Längsdrehachse (30) ist; und
wobei wenigstens eine der ersten Buchse (28) und der zweiten Buchse (128) innerhalb des jeweiligen Endes (22, 23) der Walze (20) einstellbar gelagert ist, sodass die Achse der wenigstens einen der ersten Buchse (28) und der zweiten Buchse (128) relativ zu der Längsdrehachse (30) versetzbar ist;
das Verfahren umfassend das Einstellen eines Versatzes der wenigstens einen der ersten Buchse (28) und der zweiten Buchse (128) relativ zu dem zylindrischen Außenabschnitt, um die Achse der wenigstens einen der ersten Buchse (28) und der zweiten Buchse (128) relativ zu der Längsachse (30) zu versetzen.

12. Verfahren nach Anspruch 11, wobei die Achse der wenigstens einen der ersten Buchse und der zweiten Buchse von der Längsdrehachse um bis zu 1 mm, gegebenenfalls bis zu 0,5 mm, gegebenenfalls bis zu 0,1 mm, gegebenenfalls bis zu 0,05 mm versetzt wird.

13. Verfahren nach Anspruch 11 oder 12, wobei die wenigstens eine der ersten Buchse und der zweiten Buchse innerhalb des jeweiligen Endes der Walze mit einem vorbestimmten Spiel in einer Ebene senkrecht zu der Längsachse montiert ist, wobei die wenigstens eine der ersten Buchse und der zweiten Buchse relativ zu dem jeweiligen Ende der Walze durch eine Vielzahl von einstellbaren Befestigungselementen einstellbar fixierbar ist; und wobei die wenigstens eine der ersten Buchse und der zweiten Buchse durch Einstellen der einstellbaren Befestigungselemente relativ zu dem zylindrischen Außenabschnitt einstellbar versetzt wird.

14. Verfahren nach einem der Ansprüche 11 bis 13, wobei vor dem Einstellen des Versatzes der wenigstens einen der ersten Buchse und der zweiten Buchse die Walze einstellbar in einem Wellmaschinenrahmen im Wesentlichen parallel zu einer zweiten Walze einstellbar gelagert wird, und wobei die Walze innerhalb des Rahmens auf eine erste vorbestimmte Toleranz eingestellt wird, sodass der im Wesentlichen zylindrische Abschnitt der Walze mit einem entsprechenden im Wesentlichen zylindrischen Abschnitt der zweiten Walze entlang einer Tangentialebene ausgerichtet ist, in der sich die Außenumfangsflächen der Walze und der zweiten Walze in nächster Nähe zueinander befinden.

15. Verfahren nach Anspruch 14, wobei die Walze auf eine zweite vorbestimmte Toleranz eingestellt wird, die feiner als die erste vorbestimmte Toleranz ist, indem der Versatz der wenigstens einen der ersten Buchse und der zweiten Buchse relativ zu dem zylindrischen Außenabschnitt eingestellt wird, um die Achse der wenigstens einen der ersten Buchse und der zweiten Buchse relativ zu der Längsachse zu versetzen.

## Revendications

1. Rouleau réglable (20) d'un dispositif de crêpage pour matériau en feuille, comprenant :
une portion extérieure sensiblement cylindrique (21) ayant une première extrémité (22) et une deuxième extrémité (23) avec un axe longitudinal de rotation (30) s'étendant entre la première extrémité (22) et la deuxième extrémité (23) ;
une première douille (26) montée à l'intérieur de la première extrémité (22) du rouleau et dans lequel la première douille (26) présente un alésage cylindrique (28) avec un axe qui est parallèle à l'axe longitudinal de rotation (30) ;
**caractérisé en ce que**
une deuxième douille (126) est montée à l'intérieur de la deuxième extrémité (23) du rouleau (20) ;
la deuxième douille (126) présente un alésage cylindrique (128) avec un axe qui est parallèle à l'axe longitudinal de rotation (30) ;
dans lequel au moins l'une parmi la première douille (26) et la deuxième douille (126) est montée de manière réglable à l'intérieur de l'extrémité (22, 23) respective du rouleau (20) de telle sorte que l'axe de l'au moins une parmi la première douille (26) et la deuxième douille (126) est déplaçable par rapport à l'axe longitudinal de rotation (30).

2. Rouleau réglable selon la revendication 1, dans lequel l'axe de l'au moins une parmi la première douille et la deuxième douille est déplaçable par rapport à l'axe longitudinal de rotation jusqu'à 1 mm, facultativement jusqu'à 0,5 mm, facultativement jusqu'à 0,1 mm, facultativement jusqu'à 0,05 mm.

3. Rouleau réglable selon la revendication 1 ou 2, dans lequel l'au moins une parmi la première douille et la deuxième douille est montée à l'intérieur de l'extrémité respective du rouleau avec un jeu prédéterminé dans un plan perpendiculaire à l'axe longitudinal, et dans lequel l'au moins une parmi la première douille et la deuxième douille est fixable de manière réglable par rapport à l'extrémité respective du rouleau par une pluralité de fixations réglables.

4. Rouleau réglable selon la revendication 3, dans lequel la pluralité de fixations réglables comprend une pluralité de vis de réglage, dans lequel la portion extérieure sensiblement cylindrique est pourvue d'une pluralité d'alésages filetés orientés radialement et espacés circonférentiellement au niveau de la première extrémité ou de la deuxième extrémité ou à la fois de la première extrémité et de la deuxième extrémité, et dans lequel la pluralité de vis de réglage peut tourner de manière réglable au sein des alésages filetés de manière à maintenir fermement en place la première douille ou la deuxième douille respective par rapport à la première extrémité ou à la deuxième extrémité respective selon des déplacements différents sélectionnables de l'axe de la douille par rapport à l'axe longitudinal de rotation.

5. Rouleau réglable selon la revendication 1, dans lequel l'axe de l'au moins une parmi la première douille et la deuxième douille est décalé par rapport à l'axe longitudinal de rotation, ou incliné par rapport à celui-ci, ou à la fois décalé et incliné par rapport à celui-ci ; et
dans lequel l'au moins une parmi la première douille et la deuxième douille est réglable de manière rotative par rapport à la portion extérieure cylindrique de manière à permettre le déplacement de l'axe de l'au moins une parmi la première douille et la deuxième douille le long d'une trajectoire orbitale autour de l'axe longitudinal pendant le réglage.

6. Rouleau réglable selon la revendication 5, dans lequel le décalage, ou l'inclinaison, ou le décalage et l'inclinaison de l'axe de l'au moins une parmi la première douille et la deuxième douille par rapport à l'axe longitudinal de rotation sont assurés par une excentricité dans la portion de bride respective.

7. Rouleau réglable selon la revendication 5, dans lequel le décalage, ou l'inclinaison, ou le décalage et l'inclinaison de l'axe de l'au moins une parmi la première douille et la deuxième douille par rapport à l'axe longitudinal de rotation sont assurés par une excentricité dans la douille.

8. Rouleau réglable selon l'une quelconque des revendications 5 à 7, dans lequel le décalage de l'axe de l'au moins une parmi la première douille et la deuxième douille par rapport à l'axe longitudinal de rotation est non supérieur à 1 mm, facultativement non supérieur à 0,5 mm, facultativement non supérieur à 0,1 mm, facultativement non supérieur à 0,05 mm.

9. Unité de rouleaux pour un dispositif de crêpage de matériau en feuille comprenant un premier rouleau réglable selon une quelconque revendication précédente, en combinaison avec un deuxième rouleau comprenant une portion extérieure sensiblement cylindrique ayant une première extrémité et une deuxième extrémité, avec un axe longitudinal de rotation s'étendant entre les première et deuxième extrémités, l'axe longitudinal du deuxième rouleau étant sensiblement parallèle à l'axe longitudinal du premier rouleau, et les premier et deuxième rouleaux étant mobiles l'un par rapport à l'autre de manière à amener les surfaces extérieures cylindriques à proximité étroite le long d'un plan tangent entre les surfaces extérieures cylindriques.

10. Unité de rouleaux selon la revendication 9, dans lequel un réglage fin d'une orientation de l'axe longitudinal de rotation de la portion extérieure sensiblement cylindrique du premier rouleau par rapport à une orientation de l'axe longitudinal de rotation de la portion extérieure sensiblement cylindrique du deuxième rouleau est obtenu en déplaçant l'axe de l'au moins une parmi la première douille et la deuxième douille par rapport à l'axe longitudinal de rotation de la portion extérieure sensiblement cylindrique du premier rouleau.

11. Procédé de réglage d'une orientation d'un axe longitudinal d'un rouleau (20) d'un dispositif de crêpage pour matériau en feuille, dans lequel le rouleau (20) comprend :
une portion extérieure sensiblement cylindrique ayant une première extrémité (22) et une deuxième extrémité (23) avec un axe longitudinal de rotation (30) s'étendant entre la première extrémité (22) et la deuxième extrémité (23) ;
une première douille (26) montée à l'intérieur de la première extrémité (22) du rouleau (20) et dans lequel la première douille (26) présente un alésage cylindrique (28) avec un axe qui est parallèle à l'axe longitudinal de rotation (30) ;
**caractérisé en ce que**
une deuxième douille (126) est montée à l'intérieur de la deuxième extrémité (23) du rouleau (20) ;
dans lequel la deuxième douille (126) présente un alésage cylindrique (128) avec un axe qui est parallèle à l'axe longitudinal de rotation (30) ; et
dans lequel au moins l'une parmi la première douille (28) et la deuxième douille (128) est montée de manière réglable à l'intérieur de l'extrémité (22, 23) respective du rouleau (20) de telle sorte que l'axe de l'au moins une parmi la première douille (28) et la deuxième douille (128) est déplaçable par rapport à l'axe longitudinal de rotation (30) ;
le procédé comprenant le réglage d'un déplacement de l'au moins une parmi la première douille (28) et la deuxième douille (128) par rapport à la portion extérieure cylindrique de manière à déplacer l'axe de l'au moins une parmi la première douille (28) et la deuxième douille (128) par rapport à l'axe longitudinal (30).

12. Procédé selon la revendication 11, dans lequel l'axe de l'au moins une parmi la première douille et la deuxième douille est déplacé par rapport à l'axe longitudinal de rotation jusqu'à 1 mm, facultativement jusqu'à 0,5 mm, facultativement jusqu'à 0,1 mm, facultativement jusqu'à 0,05 mm.

13. Procédé selon la revendication 11 ou 12, dans lequel l'au moins une parmi la première douille et la deuxième douille est montée à l'intérieur de l'extrémité respective du rouleau avec un jeu prédéterminé dans un plan perpendiculaire à l'axe longitudinal, dans lequel l'au moins une parmi la première douille et la deuxième douille est fixable de manière réglable par rapport à l'extrémité respective du rouleau par une pluralité de fixations réglables∘; et dans lequel l'au moins une parmi la première douille et la deuxième douille est déplacée de manière réglable par rapport à la portion extérieure cylindrique en réglant les fixations réglables.

14. Procédé selon l'une quelconque des revendications 11 à 13, dans lequel avant de régler le déplacement de l'au moins une parmi la première douille et la deuxième douille, le rouleau est monté de manière réglable dans un châssis de machine de crêpage sensiblement parallèle à un deuxième rouleau, et dans lequel le rouleau est réglé au sein du châssis à une première tolérance prédéterminée de telle sorte que la portion sensiblement cylindrique du rouleau est alignée avec une portion sensiblement cylindrique correspondante du deuxième rouleau le long d'un plan tangent où les surfaces circonférentielles externes du rouleau et du deuxième rouleau sont les plus proches.

15. Procédé selon la revendication 14, dans lequel le rouleau est réglé à une deuxième tolérance prédéterminée, plus fine que la première tolérance prédéterminée, en réglant le déplacement de l'au moins une parmi la première douille et la deuxième douille par rapport à la portion extérieure cylindrique de manière à déplacer l'axe de l'au moins une parmi la première douille et la deuxième douille par rapport à l'axe longitudinal.
